# EUROPEAN PATENT SPECIFICATION

(11) **EP 3 990 400 B1**
(45) Date of publication and mention of the grant of the patent: **25.12.2024**
(21) Application number: 20739811.6
(22) Date of filing: 23.06.2020
(51) Int. Cl.: C02F 3/12, C02F 3/08, C02F 3/30, C02F 101/16

(54) **PROCESS FOR REMOVING AMMONIUM FROM A WASTEWATER STREAM**
VERFAHREN ZUR ENTFERNUNG VON AMMONIUM AUS EINEM ABWASSERSTROM
PROCÉDÉ D'ÉLIMINATION D'AMMONIUM D'UN COURANT D'EAUX USÉES

(30) Priority: 27.06.2019 US 201962867272 P
(43) Date of publication of application: 04.05.2022
(73) Proprietor: Veolia Water Solutions & Technologies Support, 94417 Saint-Maurice (FR)
(72) Inventor: ZHAO, Hong, Raleigh, North Carolina 27604 (US); KRUPA, Kenneth, Salem, Virginia 24153 (US); DIMASSIMO, Richard, Wake Forest, North Carolina 27587 (US); LEMAIRE, Romain, 37210 Vernou sur Brenne (FR)
(74) Representative: Vidon Brevets & Stratégie
(86) International application number: PCT/US2020/039069
(87) International publication number: WO 2020/263786

(56) References cited:
- US-A1- 2012 006 744
- US-A1- 2013 264 280

## Description

### FIELD OF THE INVENTION

The present invention relates to a deammonification process for removing ammonium from reject water in a side stream through an integrated fixed film activated sludge sequencing batch reactor process.

A number of biofilm wastewater treatment processes can be used to remove contaminants from wastewater. One such process is referred to as a moving bed biofilm reactor (MBBR) process. MBBR processes are considered biofilm only processes with continuous flow in a completely mixed reactor. MBBR systems include an aeration tank. Contained in the aeration tank is an array of plastic biofilm carriers that support the biofilm used to treat the wastewater passing through the aeration tank. The biofilm carriers can float or in some cases may sink when not being mixed. In the course of treating wastewater, the biofilm on the carriers contacts the wastewater and a biological process ensues. There are numerous advantages to MBBR processes. Principally these advantages include ease of operation and robustness.

Similar in some respects to an MBBR process is what is referred to as an integrated fixed film activated sludge (IFAS) process. It too is a continuous flow process and entails biofilm carriers for supporting some biomass. The IFAS process, however, also includes suspended biomass. Because of the suspended biomass and the continuous flow, it is common to employ an external clarifier downstream from the aeration tank to recover the suspended biomass and recycle it to the aeration tank.

It is also possible to operate an IFAS reactor as a sequencing batch reactor. This is known as an IFAS SBR process. This process, contrasted with the MBBR and IFAS processes, is a non-continuous process. Instead, wastewater is treated in a sequence of steps including filling, aeration and mixing, followed by settling which in turn is followed by decanting.
Decanting is usually provided by one or more floating decanters that reside on the surface of the water in the IFAS SBR reactor.

It is known from U.S. 2012/0006744 an upflow biological reactor for treating wastewater that contains biofilm carriers, as well as suspended biomass. The biological reactor is configured to be used for aerobic, anoxic, and anaerobic treatment. The biological reactor is specifically designed to reduce the amount of excess aerobic sludge and high solid concentrations in the treated effluent.

Many wastewaters contain ammonium-nitrogen (NH₄-N) (referred to herein as ammonium). To meet various regulatory limits, the ammonium must be removed from the wastewater before the wastewater is discharged. The conventional approach employs a two-step biological process referred to as a nitrification and denitrification process.

In recent years it has been discovered that ammonium in certain waste streams such as anaerobic sludge digester dewatering liquid (found in a side stream) can be removed by utilizing different bacteria from those normally associated with conventional nitrification-denitrification. In this case, a typical process combines aerobic nitritation and an anaerobic ammonium oxidation (anammox). In the nitritation step, aerobic ammonium oxidizing bacteria (AOB) oxidize a substantial portion of the ammonium in the waste stream to nitrite (NO₂⁻). Then in the second step, the anaerobic ammonium oxidizing bacteria (AnAOB) converts the remaining ammonium and the nitrite to nitrogen gas (N₂) and a small amount of nitrate (NO₃⁻). The total process, i.e. nitritation and the anammox process, is referred to as deammonification.

MBBR processes may be used in a side stream deammonification process to remove ammonium from reject water produced by an anaerobic digester. There are some limitations to an MBBR process in such cases. MBBR processes are typically not highly efficient in a side stream deammonification process where the feed to the anaerobic digester is pre-treated by a thermal hydrolysis process. Moreover, the capacity and conversion rate of an MBBR process are often less than ideal.

A continuous flow IFAS process, on the other hand, addresses some of these shortcomings. IFAS processes typically have high conversion rates (generally two times) and higher effluent quality. Moreover, an IFAS process can accommodate inhibiting organic compounds found in some waste streams better than an MBBR process. When a thermal hydrolysis process is used to treat the feed to an anaerobic digester, an IFAS configuration requires less warm dilution water. This lower dilution ratio is significant to thermally hydrolyzed reject water projects because thermal hydrolysis processes can provide only a limited quantity of warm water dilution. However, the continuous flow IFAS system has some disadvantages. The main disadvantage is that a continuous flow IFAS system requires an external clarifier to separate the suspended biomass from the treated effluent such that the separated suspended biomass can be returned to the IFAS reactor. External clarifiers require additional tanks and increase the footprint of the total system, which is not always available, especially in retrofit projects. In addition, external clarifiers require more mechanical equipment, such as clarifier mechanisms and pumps for returning activated sludge.

It is know from U.S. 2013/0264280 a mainstream deammonification process for treating wastewater that utilizes AOB and ANAMMOX bacteria to remove ammonium. The deammonification process disclosed entails growing AOB and ANAMMOX bacteria in a side stream where the wastewater has a relatively high ammonium concentration and utilizes the AOB and ANAMMOX bacteria grown in the side stream to remove ammonium from the wastewater in the main stream.

In some instances, wastewater treatment systems and processes are upgraded from time-to-time at wastewater treatment facilities. This can occur in the case of side stream deammonification processes. For example, the side stream system can be upgraded by retrofitting a thermal hydrolysis system to pre-treat the feed to an anaerobic digester. This will introduce inhibitors (organic compounds) that adversely affect the efficiency of an existing

MBBR deammonification process. Furthermore, overtime the flow and load to an existing MBBR may increase and the existing MBBR system might not be adequate to handle such loads. In these cases, there is a need for a retrofitable deammonification system that can accommodate inhibiting compounds and efficiently treat additional loads directed to the deammonification system and which is amenable to an easy retrofit without significantly increasing the footprint of the deammonification system.

The present invention relates to a method according to claim 1.

The method according to the invention is carried out in a single reactor designed to be an MBBR or an IFAS SBR. Converting the reactor from an MBBR to an IFAS SBR, or vice versa, is simple and easy to implement. With the design of the single tank or reactor, the two operation modes, MBBR and IFAS SBR, are interchangeable depending on the treatment needs.

The single reactor includes a fixed media retaining screen that is designed to discharge treated wastewater when the reactor assumes an MBBR mode, as well as when the reactor assumes an IFAS SBR mode. In other words, the same media retaining screen is employed or used to discharge treated wastewater in either the MBBR mode or the IFAS SBR mode.

The present invention entails a wastewater treatment process that includes a side stream deammonification process for removing ammonium from sludge that is removed from a main stream process. The side stream may include pretreatment via thermal hydrolysis, although that is not essential or required. The side stream includes an anaerobic digester and a downstream IFAS SBR for treating reject water from the anaerobic digester. Through a batch process carried out in the IFAS SBR, wastewater is filled, aerated and reacted in a first phase, which is then followed by a settling phase which in turn is followed by a decanting phase. In this process, the total suspended solids (TSS) emitted by the IFAS SBR is not of great concern because the effluent from the IFAS SBR can be returned to the headworks of the wastewater treatment plant. Therefore, decanting from water surface is not necessary. Solids liquid separation steps (settling and decanting) is required only to retain enough suspended biomass. Therefore, media retention screens can be used to decant the reactor liquid from both clear zone and media zone but NOT from the bottom sludge zone.

The deammonification reactor used in the process for removing ammonium from wastewater is configured to function as a moving bed biofilm reactor (MBBR) or as an integrated fixed film activated sludge sequencing batch reactor (IFAS SBR), the deammonification reactor comprising:
a single deammonification tank;
an aeration grid disposed in a bottom portion of the tank;
wherein the deammonification tank is configured to contain biofilm carriers having biomass supported thereon;
the single tank including a retaining screen or a number of screens for discharging treated wastewater from the deammonification reactor and for retaining the biofilm carriers in the tank and preventing the biofilm carriers from being discharged with treated wastewater from the tank;
wherein the single tank deammonification reactor is configured to operate either in a continuous flow MBBR mode or in a non-continuous IFAS SBR mode;
wherein the retaining screen is configured to discharge treated water when the deammonification reactor assumes an MBBR; and
wherein the retaining screen is fixed relative to the tank and configured as a decanter for decanting treated wastewater from the deammonification reactor when the deammonification reactor assumes an IFAS SBR.

The present invention entails a method for treating wastewater containing ammonium and removing ammonium in a side stream process through deammonification in an integrated fixed film activated sludge sequencing batch reactor (IFAS SBR), the method comprising:
directing the wastewater to a mainstream biological treatment process and subjecting the wastewater to biological treatment and producing sludge and a clarified effluent;
treating the sludge in a side stream process by:
   directing the sludge to an anaerobic digester in the side stream;
   digesting the sludge in the anaerobic digester to produce digested sludge;
   dewatering the digested sludge in the side stream to produce the reject water;
   directing the reject water to the IFAS SBR which contains biomass supported on carriers and suspended biomass and removing ammonium from the reject water in the IFAS SBR through a batch process that includes a series of steps including:
      filling the IFAS SBR with the reject water;
      aerating the reject water in the IFAS SBR;
      settling the biomass in the IFAS SBR; and
      decanting treated reject water by directing the treated reject water through a fixed carrier retaining screen.

There are numerous advantages in utilizing an IFAS SBR in a side stream deammonification process. As noted above, the IFAS SBR provides a relatively high ammonium conversion rate and does not require an external clarifier which is required in a conventional continuous flow IFAS system. By utilizing the fixed media screens in the reactor to decant supernatant in the IFAS SBR, this eliminates the need for conventional floating decanters. Further, the flexibility of the IFAS SBR means that an anoxic phase can be incorporated into the process for removing nitrate that might remain from a deammonification process. Finally, the IFAS SBR mode significantly increases the capacity of the system and is especially suitable for waste streams with inhibiting compounds such as found in the effluent from a thermal hydrolysis unit.

Other objects and advantages of the present invention will become apparent and obvious from a study of the following description and the accompanying drawings which are merely illustrative of such invention.

### BRIEF DESCRIPTION OF THE DRAWINGS

Figure 1 illustrates the reactor which is designed to be operated in either an MBBR mode or an IFAS SBR mode.
Figure 2 illustrates the reactor being operated in an MBBR mode.
Figure 3 illustrates the reactor being operated in the IFAS SBR mode during an initial phase of an IFAS SBR process.
Figure 4 shows the reactor operating as an IFAS SBR process during a settling phase.
Figure 5 shows the reactor operating in the IFAS SBR mode and illustrating the decanting phase.
Figure 6 is a schematic illustration of a wastewater treatment process including a side stream deammonification process employing the reactor operating in an IFAS SBR mode.

### DESCRIPTION OF EXEMPLARY EMBODIMENTS

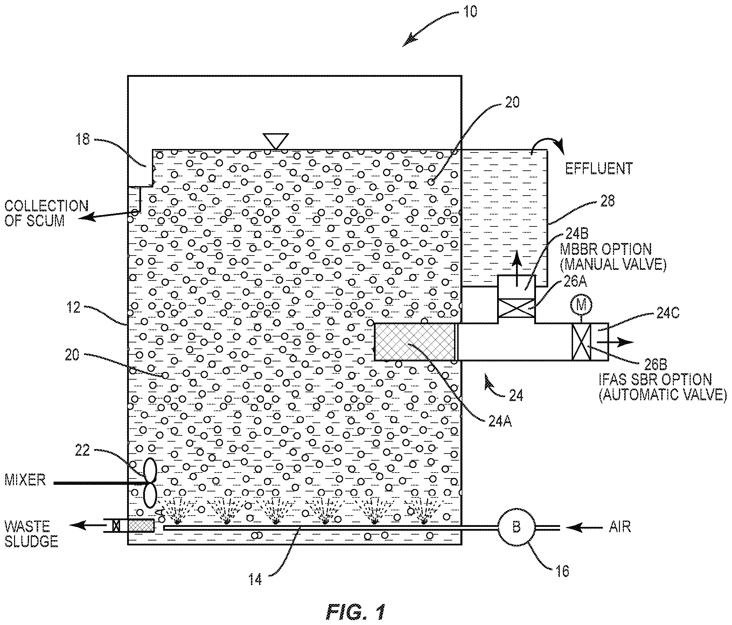

With further reference to the drawings, particularly Figure 1, a single reactor is shown therein and indicated generally by the numeral 10. As discussed below, reactor 10 is designed as an MBBR or an IFAS SBR. Reactor 10 includes a tank 12 having an aeration grid 14 supported adjacent the bottom of the tank. A blower 16 is operatively connected to the aeration grid for supplying air to the aeration grid which in turn disperses air into the reactor 10. A scum trough 18 extends around at least a portion of the reactor 10 at a selected height. Scum trough 18 is designed to receive scum from an upper surface of the wastewater contained in the reactor 10 and to discharge collected scum from the scum trough.

Reactor 10 also includes biofilm carriers or media 20. Details of the biofilm carriers 20 are not dealt with herein because their construction and use is well known and appreciated by those skilled in the art. Biofilm carriers are typically made of plastic material with a density close to the density of water (1 g/cm³). In some cases, the density of the biofilm carriers is less than the density of water which means that they float in the wastewater contained in reactor 10. In many cases, floating carriers are preferable because their use generally increases the capacity of the reactor. In other cases, the density of the carriers 20 might be above the density of water, in which case these biofilm carriers sink when not being physically mixed with the wastewater in the reactor. It is appreciated that these biofilm carriers 20 support an active biomass or biofilm which is used to biologically treat wastewater in the reactor 10.

To mix the wastewater and the biofilm carriers 20, there is provided aeration grids 14 and a mixer or mixers 22. In some processes capable of being performed in the reactor 10, the mixer 22, along with air dispersed by the aeration grid 14, mixes the biofilm carriers 20 such that they are generally uniformly distributed throughout portions of the reactor 10. Generally, reactor mixing is mainly provided by the aeration. Mixers are used for special occasions such as startup and when anoxic phases are integrated into the SBR sequences.

To discharge treated water from the reactor 10, there is provided a fixed biofilm carrier retaining screen or screens (carrier screen), indicated generally by the numeral 24, for discharging treated wastewater from the reactor 10. Carrier screen 24 serves two functions. First, it serves to discharge treated water from the reactor 10. When reactor 10 is an MBBR, treated wastewater is continuously discharged via the carrier screen 24. When reactor 10 assumes an IFAS SBR, the carrier screen 24 is configured to be a decanter. Secondly, it acts as a retaining screen and prevents the biofilm carriers 20 from being discharged with the treated water from the reactor 10. One of the advantages of the present invention is that the carrier screen 24 serves to discharge treated water when the reactor 10 operates as an MBBR or as an IFAS SBR. Therefore, if there is occasion to convert the reactor 10 from an MBBR to an IFAS SBR, substantial modifications do not have to be made to the reactor 10.

Continuing to view the carrier screen 24, it is seen from Figure 1 that the same comprises a biofilm carrier retaining screen 24A. Screen 24A includes openings that are sufficiently small to prohibit the biofilm carriers 20 from passing through when treated water is discharged from the reactor. Carrier screen 24 includes bifurcated outlets 24B and 24C. Outlet 24B includes a manual control valve 26A and is designed to discharge treated water when reactor 10 assumes an MBBR. An effluent tank 28 is communicatively connected to outlet 24B and in this example, forms a part of reactor 10. The effluent tank 28 effectively serves as an effluent weir box when reactor 10 assumes an MBBR that controls the water level in reactor 10. Outlet 24C includes an automatic control valve 26B and is designed to be used to discharge treated wastewater when reactor 10 assumes an IFAS SBR.

Reactor 10 is configured to be an MBBR or an IFAS SBR. The term "configured to" as used herein and in the claims means specifically designed to perform a recited function. Reactor 10 is designed to be employed in either an MBBR process or an IFAS SBR process.

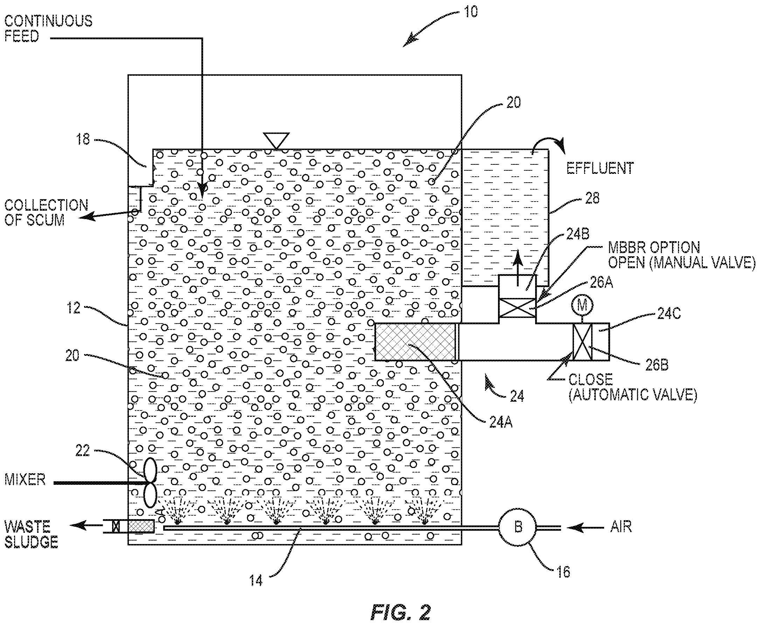

Figure 2 shows the reactor 10 operating as a continuous flow MBBR process. Here the reactor 10 includes the biofilm carriers 20. Although the specific gravity of the biofilm carriers 20 can vary, in many cases it is preferable that their specific gravity be less than water which enables them to float in the wastewater in the reactor 10. In this example, the position of the carrier screen 24 is disposed generally midway the height of the reactor 10. It is understood and appreciated that the particular position or height of the carrier screen 24 can vary.

Continuing to refer to Figure 2, as wastewater flows through reactor 10, air can be supplied continuously or intermittently to the wastewater by the aeration grid 14. The combined effect of air dispersed by the aeration grid 14 and mixing by the mixer 22 causes the biofilm carriers 20 to be mixed with the wastewater and to generally be uniformly distributed through portions of the reactor 10. Although both aeration and mixer can be on at the same time, normally, mixer is turned on only during air off period.

As the wastewater flows through reactor 10, biofilm on the carriers 20 contacts the wastewater. Various biological treatments can be performed in this MBBR mode by the biofilm carriers 20. Generally the biomass supported on the carriers 20 consumes organic material. Specifically, an MBBR process can be employed for denitrification, nitrification, BOD/COD removal, and deammonification.

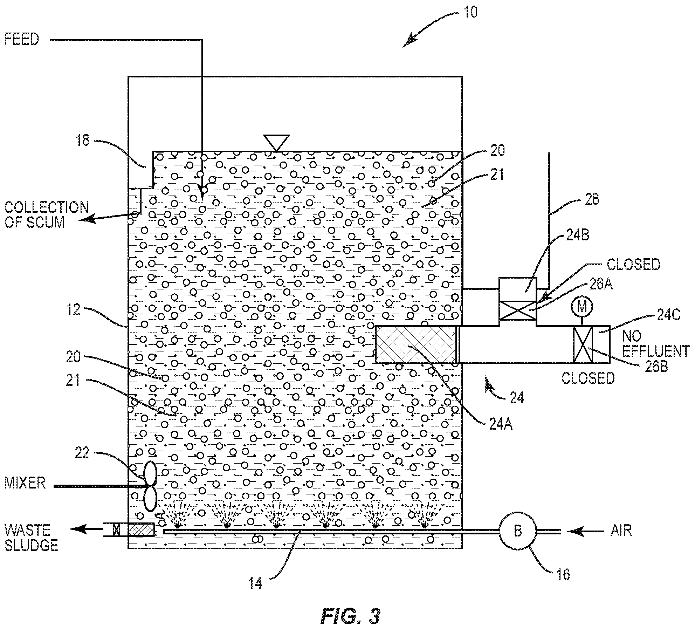

Reactor 10 can assume an IFAS SBR without significant alterations. As noted before, in an IFAS process, both suspended biomass (the suspended biomass is depicted at 21 in Figure 3) and fixed film biomass (supported on carriers 20) are contained in the reactor 10 and employed to treat wastewater. When the IFAS process is phased or operated as a sequencing batch mode, various phases or steps take place over time in reactor 10 during the course of treating a batch of wastewater. These steps include: filling the reactor; aerating the wastewater in the reactor; reacting the suspended biomass and biofilm biomass with the wastewater; settling the wastewater; and decanting the treated wastewater. Some of these steps can be performed simultaneously. For example, in one phase the filling, aeration and reaction may occur simultaneously. In some cases, the settling phase can be substantially reduced or even eliminated if the decanting volume is relatively small.

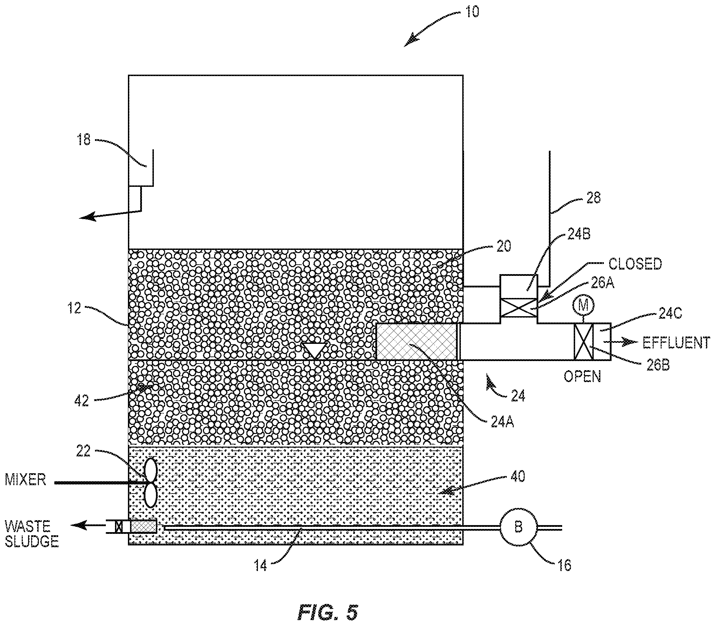

Figures 3, 4 and 5 show the reactor 10 an IFAS SBR. In this example, there are three distinct phases in the process: (1) filling, aeration and reaction; (2) settling; and (3) decanting.

Figure 3 shows the first phase. Wastewater to be treated is fed into the reactor 10. During this first phase, control valves 26A and 26B are closed, assuring that no wastewater is discharged from the reactor 10. During filling, the aeration grid 14 supplies air to the wastewater. Further, at appropriate times after starting to fill the reactor, the mixer 22 can be actuated to mix the wastewater, suspended biomass and biofilm carriers 20 if aeration is stopped. During this filling, aeration and reaction phase, biological reactions take place and the treatment of the wastewater ensues. As discussed in more detail below, the IFAS SBR can perform, for example, deammonification. During the reaction phase, AOB and AnAOB work together to convert ammonium to nitrogen gas. Once the reactor 10 is filled to a selected level, the feed to the reactor is shut off. The influent feeding in a preferred embodiment will generally last the entire length of the reaction phase. The advantage of a relatively long feeding time is that it reduces the requirement for influent equalization. Before proceeding to the second phase, settling, it may be appropriate in some cases to extend the reaction time beyond the conclusion of filling.

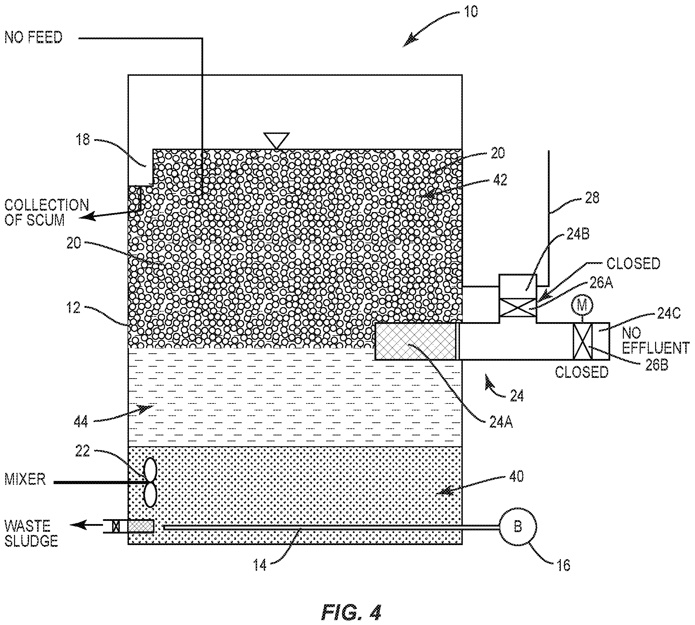

During the settling phase, as shown in Figure 4, aeration is off, mixer 22 is not actuated and valves 26A and 26B remain closed, preventing any discharge of wastewater from the reactor 10. In the settling process, the suspended biomass 21 settles to a bottom portion of the reactor 10 and forms what is referred to as a sludge layer 40. See Figure 4. In this example, the biofilm carriers 20 have a specific gravity less than water and hence float. As shown in Figure 4, the biofilm carriers 20 will form what is referred to as an upper media layer 42. Between the media layer 42 and the sludge layer 40 is what is referred to as a clear zone 44. In this example as shown in Figure 4, the carrier screen 24 is placed at the interface formed by the media layer 42 and the clear zone 44. During the settling phase, sludge can be entrained in the media layer 42. A sludge/media separation phase can be incorporated into the SBR sequence. That is, by operating the mixer 22 at a very low speed to stir the biofilm carriers 20, this will facilitate the release of solids contained in the media layer 42.

After the suspended biomass in the reactor 10 settles, decanting follows. Now valve 26B is open and valve 26A remains closed. Treated wastewater passes through the carrier screen 24 (which now acts as a decanter) into outlet 24C. Note that during decanting the media layer 42 containing the biofilm carriers 20 slowly drifts down and approaches the sludge layer 40. The decanting phase can be terminated at various times relative to the wastewater level in the reactor 10. Of course, when the upper surface of the wastewater moves below the carrier screen 24, it follows that decanting is complete. Once decanting is terminated or is complete, then another batch of wastewater is directed into the reactor 10 and the same process follows.

In a typical design, the sludge volume is determined by the process's capacity for nitritation. The clear water volume, which is proportional to the sludge volume, provides a safety factor to prevent the loss of sludge during the decanting phase. Thus, the location of the carrier screen 24 should, in one example, be located at the top of the clear water zone 44 (after settling). In other words, the carrier screen 24 is located at the interface of the media layer 42 and the clear water zone 44, as shown in Figure 4. Carrier volume is determined by the process's capacity for anammox. Typically, carriers or media are added into the tank at 50% of the reactor volume. In Figure 4, the media layer 42 should take about 50% of the height of the tank without considering the free board. Typically the decanting phase ends when the reactor water level reaches the carrier screen 24. There will generally be some portion of the carriers above the water level. This means that the media layer 42 will settle due to its own weight during the decanting phase. It should be noted that at the end of decanting, the bottom of the media layer 42 can reach the top of the sludge layer 40.

One of the purposes of settling, decanting and wasting sludge is to maintain an adequate solids retention time (SRT) to retain enough AOB and at the same time to repress nitrite oxidizing bacteria (NOB) in the suspended growth. Therefore, sludge wasting can be accomplished by either sludge wasting pumps, gravity blowdown or releasing biological solids with the treated effluent.

It is pointed out that the same carrier screen 24 employed to decant in the IFAS SBR mode is the same carrier screen used to continuously discharge treated wastewater from the reactor 10 when it operates as an MBBR. This means that conventional floating decanters are not required in the reactor 10.

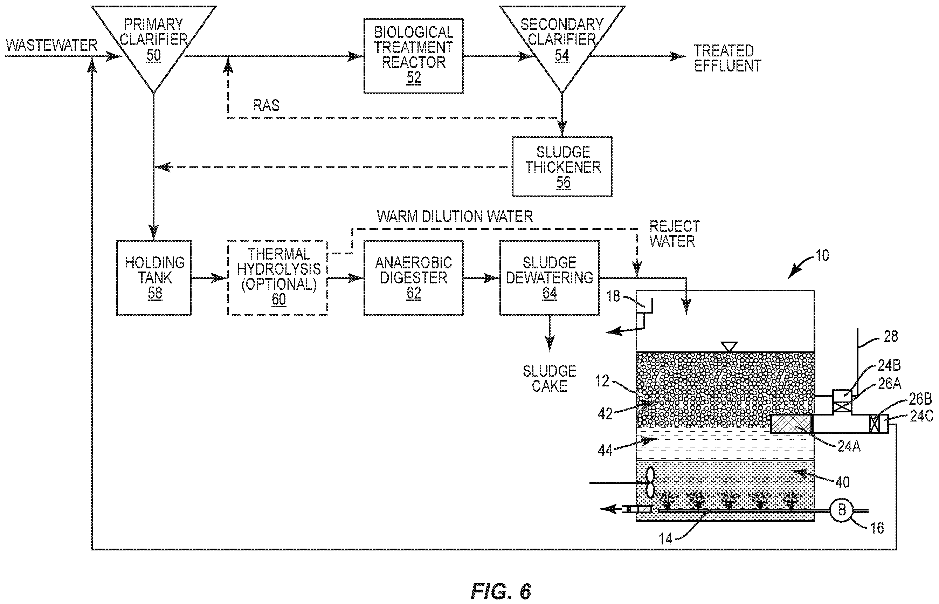

Figure 6 is a schematic illustration of a wastewater treatment process having a main stream and a side stream. The side stream includes an IFAS SBR similar to that shown in Figures 3-5 and discussed above. As explained below, the IFAS SBR in the side stream is designed to remove ammonium from the side stream through a deammonification process.

With further reference to Figure 6 and the wastewater treatment system and process shown therein, wastewater to be treated is directed to a primary clarifier 50. Primary clarifier 50 treats the wastewater influent by producing a primary effluent and primary sludge. As discussed below, the primary sludge is directed to the side stream for treatment. Primary effluent from the primary clarifier 50 is directed to a biological reactor 52 for secondary treatment. The biological process employed in the main stream to treat primary effluent generally focuses mainly on biochemical oxygen demand (BOD) removal and nitrification. There are various BOD removal and nitrification systems that are well known and appreciated by those skilled in the art. For example, BOD can be removed by conventional activated sludge processes, MBBR processes, as well as IFAS processes. In any event, the biological reactor 52 produces a secondary effluent. The secondary effluent is directed to a secondary clarifier 54, which in turn produces a clarified treated effluent and secondary sludge. In some cases, the secondary sludge produced by the secondary clarifier 54 can be recycled as return activated sludge (RAS) to the biological treatment reactor 52. As another option, as shown in Figure 6, the secondary sludge can be directed to a sludge thickener 56 which dewaters and thickens the sludge. As those skilled in the art will appreciate, the primary clarifier 50, biological reactor 52 and secondary clarifier 54 form part of the main stream system and process.

Turning to the side stream as depicted in Figure 6, primary sludge from the primary clarifier 50 is directed to a sludge holding tank 58. As an option, the secondary sludge can be mixed with the primary sludge in the sludge holding tank 58. Sludge in the sludge holding tank 58 can be directed to a thermal hydrolysis unit 60. As Figure 6 indicates, the thermal hydrolysis unit 60 is optional and may not be required or needed in some side stream processes. While thermal hydrolysis is optional, when it is used with anaerobic digestion, this typically increases the volatile solids reduction by as much as 50% compared with anaerobic digestion alone. It is postulated that the ammonium release from the anaerobic digester also increases substantially when the anaerobic digestion process is preceded with a thermal hydrolysis process. Therefore, it is likely that thermal hydrolysis increases the nitrogen load in the side stream.

In any event, if a thermal hydrolysis unit 60 is employed, then the effluent therefrom is directed to an anaerobic digester 62. In cases where the thermal hydrolysis unit is not employed, sludge from the sludge holding tank 58 is directed into the anaerobic digester 62. As people ordinarily skilled in the art appreciate, the anaerobic digester 62 anaerobically digests the sludge.

Effluent from the anaerobic digester 62 is directed to a dewatering unit 64. Dewatering unit treats the sludge by producing a sludge cake and reject water which is typically relatively high in ammonium. Reject water produced by an anaerobic digester typically has a high temperature, a relatively high ammonium concentration, and generally the ratio of ammonium to carbon is relatively high. When a thermal hydrolysis unit 60 is employed in the side stream, the thermal hydrolysis unit can produce warm dilution water that is mixed with the reject water.

Reject water is directed into reactor 10 which is operated in the IFAS SBR mode and performs a deammonification process that removes ammonium from the reject water. It may be beneficial to briefly review the fundamentals of a deammonification process in the context of an IFAS SBR. Deammonification involves two separate bacteria, aerobic ammonium oxidizing bacteria (AOB) and anaerobic ammonium oxidizing bacteria (AnAOB). These are discussed in the background of the invention. An IFAS SBR process seems particularly suited for performing a deammonification process because an IFAS SBR process employs biofilm biomass and suspended biomass. In an IFAS SBR deammonification process, the suspended biomass or bacteria includes the AOB and the AOB performs a nitritation process. This leaves the biofilm biomass (AnAOB) to perform an anaerobic ammonium oxidation process that converts the remaining ammonium and the nitrite to nitrogen gas (N₂) and a small amount of nitrate (NO₃⁻).

The side stream IFAS SBR unit as shown in the side stream of the process of Figure 6 performs a deammonification process through a series of phases or steps as explained above and as shown in Figures 3-5. Once the decanting phase is reached, treated wastewater is directed from the reactor 10 via the carrier screen 24 and outlet 24C. Here the carrier screen 24 acts as a decanter for the IFAS SBR.

Treated effluent from the IFAS SBR, which is depleted in ammonium, is recycled to the main stream for further treatment. Noteworthy is the fact that there is no clarifier or solids-liquid separation unit downstream of the IFAS SBR. In this particular process, there is little concern for total suspended solids (TSS) in the effluent leaving the IFAS SBR. This is because the effluent from the IFAS SBR is recycled to the main stream for further treatment.

Thus in the Figure 6 process, during various phases of the IFAS SBR process, the suspended AOB and the biofilm AnAOB remove ammonium via the deammonification process. In one example, the IFAS SBR process begins deammonification during filling and aeration. Even during settling and decanting, the AnAOB converts ammonium and nitrite to nitrogen gas. The flexibility of the reactor 10 means that an anoxic phase can be incorporated into the overall process to denitrify the relatively small amount of nitrate that might remain from the deammonification process. With the flexibility of an SBR operation, air-off periods and mixer 22 on can be incorporated into the operating sequence for heterotrophic denitrification to remove the nitrate produced by the anammox process.

There are numerous advantages to the reactor 10 and the side stream IFAS SBR deammonification process discussed herein. First, reactor 10 operates as a single tank deammonification reactor that can employ a continuous flow MBBR process or an IFAS SBR process without requiring substantial modifications to the reactor. Secondly, an IFAS SBR is compact. The suspended sludge retention time required for AOB growth can be very short (about 2.5 days for example) because the side stream temperature is usually relatively high, typically about 30°C. Because of the short suspended sludge retention time, the volume required for holding suspended biomass is relatively small. This is another factor that contributes to the compactness of an IFAS SBR. Thirdly, the reactor 10 includes a fixed carrier retaining screen that discharges treated water from either an MBBR or an IFAS SBR. Thus, in the case of an IFAS SBR, this design eliminates the need for conventional floating decanters. Fourthly, the present invention entails a highly efficient side stream deammonification process for removing ammonium from anaerobic digester reject water through a deammonification process carried out by an IFAS SBR.

## Claims

1. A method of treating wastewater in a deammonification reactor (10) for removing ammonium from wastewater and configured to operate in one mode as a moving bed biofilm reactor (MBBR) or operate in a second mode as an integrated fixed film activated sludge sequencing batch reactor (IFAS SBR), the deammonification reactor (10) comprising:
- a single deammonification tank (12) ;
- an aeration grid (14) disposed in a bottom portion of the single deammonification tank (12) ;
wherein the single deammonification tank (12) is configured to contain biofilm carriers (20) having biomass supported thereon ; the single deammonification tank (12) including a retaining screen (24A) for discharging treated wastewater from the deammonification reactor (10) and for retaining the biofilm carriers (20) in the single deammonification tank (12) and preventing the biofilm carriers (20) from being discharged with treated wastewater from the single deammonification tank (12) ; the retaining screen (24A) having a bifurcated outlet (24B, 24C) extending therefrom through which treated wastewater flows after passing through the retaining screen (24A) ; first and second flow control valves (26A, 26B) being incorporated into the bifurcated outlet (24B, 24C) and configured to control whether the deammonification reactor (10) is operating in an MBBR mode or an IFAS SBR mode ; the first and second valves (26A, 26B) in the bifurcated outlet (24B, 24C) being configured to function as follows:
- when the first valve (26A) is open and the second valve (26B) is closed, the deammonification reactor (10) functions as a continuous flow MBBR ;
- when the first valve (26A) is closed and the second valve (26B) is open, the deammonification reactor (10) functions as a non-continuous IFAS SBR ;
wherein the retaining screen (24A) and the bifurcated outlet (24B, 24C) extending therefrom are fixed relative to the single deammonification tank (12) ; and wherein when the first valve (26A) is closed and the second valve (26B) is open, the retaining screen (24A) and at least a portion of the bifurcated outlet (24C) are configured as a decanter for decanting treated wastewater from the deammonification reactor (10),
the method including:
directing wastewater to a mainstream biological treatment process and subjecting the wastewater to biological treatment and producing sludge and a clarified effluent;
treating the sludge in a side stream by:
- directing the sludge to an anaerobic digester (62) in the side stream ;
- digesting the sludge in the anaerobic digester (62) to produce digested sludge ;
- dewatering the digested sludge in the side stream to produce reject water;
- directing the reject water to the deammonification reactor (10) which contains biomass supported on biofilm carriers (20) and suspended biomass and removing ammonium from the reject water in the deammonification reactor (10) through a batch process that includes the steps of:
- filling the deammonification reactor (10) with the reject water;
- aerating the reject water in the deammonification reactor (10) ;
- settling the biomass in the deammonification reactor (10); and
- decanting treated reject water by directing the reject water through the retaining screen (24A) and at least the portion of the bifurcated outlet (24C).

2. The method of claim 1, wherein the single tank deammonification reactor (10) is configured to operate as an IFAS SBR in the absence of a downstream clarifier.

3. The method of claim 1, wherein the biofilm carriers (20) have a specific gravity of 1 or less and are configured to float in the wastewater contained in the single deammonification tank (12).

## Patentansprüche

1. Verfahren zum Behandeln von Abwasser in einem Deammonifikationsreaktor (10) zum Entfernen von Ammonium aus Abwasser und das eingerichtet ist, in einem Modus als ein Moving Bed Biofilm Reactor (MBBR, Bewegtbett-Biofilmreaktor) zu arbeiten oder in einem zweiten Modus als ein Integrated Fixed Film Activated Sludge Sequencing Batch Reactor (IFAS SBR) zu arbeiten, wobei der Deammonifikationsreaktor (10) umfasst:
- einen einzelnen Deammonifikationstank (12);
- ein Belüftungsgitter (14), das in einem Bodenabschnitt des einzelnen Deammonifikationstanks (12) angeordnet ist;
wobei der einzelnen Deammonifikationstank (12) eingerichtet ist, Biofilmträger (20) mit darauf gelagerter Biomasse zu beinhalten; der einzelne Deammonifikationstank (12) ein Rückhaltesieb (24A) zum Abgeben von behandeltem Abwasser aus dem Deammonifikationsreaktor (10) und zum Halten der Biofilmträger (20) in dem einzelnen Deammonifikationstank (12) und Verhindern, dass die Biofilmträger (20) mit behandelten Abwasser aus dem einzelnen Deammonifikationstank (12) abgegeben werden; wobei das Rückhaltesieb (24A) einen gegabelten Auslass (24B, 24C) aufweist, der sich von diesem erstreckt, durch den behandeltes Abwasser fließt, nachdem es durch das Rückhaltesieb (24A) gegangen ist; ein erstes und zweites Durchflussregelventil (26A, 26B), die in den gegabelten Auslass (24B, 24C) integriert sind und eingerichtet sind, zu steuern, ob der Deammonifikationsreaktor (10) in einem MBBR-Modus oder einem IFAS SBR-Modus arbeitet; enthält, wobei das erste und zweite Ventil (26A, 26B) in dem gegabelten Auslass (24B, 24C) so eingerichtet sind, dass sie wie folgt funktionieren:
- wenn das erste Ventil (26A) offen ist und das zweite Ventil (26B) geschlossen ist, der Deammonifikationsreaktor (10) als Endlostrom-MBBR fungiert;
- wenn das erste Ventil (26A) geschlossen ist und das zweite Ventil (26B) offen ist, der Deammonifikationsreaktor (10) als Nicht-Endlos-IFAS SBR fungiert;
wobei das Rückhaltesieb (24A) und der gegabelte Auslass (24B, 24C), der sich von diesem erstreckt, relativ zu dem einzelnen Deammonifikationstank (12) fixiert sind; und wobei, wenn das erste Ventil (26A) geschlossen ist und das zweite Ventil (26B) offen ist, das Rückhaltesieb (24A) und mindestens ein Abschnitt des gegabelten Auslasses (24C) als ein Dekanter zum Abgießen behandelten Abwassers aus dem Deammonifikationsreaktor (10) eingerichtet sind,
wobei das Verfahren enthält:
Lenken von Abwasser zu einem Hauptstrom eines biologischen Behandlungsprozesses und Unterziehen des Abwassers einer biologischen Behandlung und Erzeugen von Schlamm und einem geklärten Abstrom;
Behandeln des Schlamms in einem Nebenstrom durch:
- Lenken des Schlamms zu einem anaeroben Faulbehälter (62) in dem Nebenstrom;
- Ausfaulen des Schlamms in dem anaeroben Faulbehälter (62), um Faulschlamm zu erzeugen;
- Entwässern des Faulschlamms, in dem Nebenstrom, um Schlammwasser zu erzeugen;
- Lenken des Schlammwassers zu dem Deammonifikationsreaktor (10), der Biomasse, auf Biofilmträgern (20) gelagert, und suspendierte Biomasse beinhaltet, und Entfernen von Ammonium aus dem Schlammwasser in dem Deammonifikationsreaktor (10) durch einen Chargenprozess, der folgende Schritte enthält:
- Füllen des Deammonifikationsreaktors (10) mit dem Schlammwasser;
- Belüften des Schlammwassers in dem Deammonifikationsreaktor (10);
- Absetzen der Biomasse in dem Deammonifikationsreaktor (10); und
- Abgießen von behandeltem Schlammwasser, indem das Schlammwasser durch das Rückhaltesieb (24A) und mindestens den Abschnitt des gegabelten Auslasses (24C) gelenkt wird.

2. Verfahren nach Anspruch 1, wobei der einzelne Deammonifikationsreaktor (10) eingerichtet ist, als ein IFAS SBR in Abwesenheit einer stromabwärts liegenden Kläranlage zu arbeiten.

3. Verfahren nach Anspruch 1, wobei die Biofilmträger (20) ein spezifisches Gewicht von 1 oder weniger aufweisen und eingerichtet sind, in dem Abwasser zu schwimmen, das in dem einzelnen Deammonifikationstank (12) beinhaltet ist.

## Revendications

1. Procédé de traitement des eaux usées dans un réacteur de désammonification (10) destiné à éliminer l'ammonium des eaux usées et configuré pour fonctionner dans un mode en tant que réacteur à biofilm à lit mobile (MBBR) ou pour fonctionner dans un deuxième mode en tant que réacteur séquentiel discontinu à boues activées à film fixe intégré et (IFAS SBR), le réacteur de désammonification (10) comprenant :
- un réservoir de désammonification unique (12) ;
- une grille d'aération (14) disposée dans une partie inférieure du réservoir de désammonification unique (12) ;
dans lequel le réservoir de désammonification unique (12) est configuré pour contenir des supports de biofilm (20) ayant une biomasse supporté par celui-ci ; le réservoir de désammonification unique (12) comprenant une grille de retenue (24A) pour évacuer les eaux usées traitées du réacteur de désammonification (10) et pour retenir les supports de biofilm (20) dans le réservoir de désammonification unique (12) et empêcher l'évacuation des supports de biofilm (20) avec les eaux usées traitées du réservoir de désammonification unique (12) ; la grille de retenue (24A) comportant une sortie double (24B, 24C) qui s'étend à partir de celle-ci et à travers laquelle les eaux usées traitées s'écoulent après avoir traversé la grille de retenue (24A) ; une première et une deuxième vannes de régulation du débit (26A, 26B) étant intégrées à la sortie double (24B, 24C) et configurées pour contrôler si le réacteur de désammonification (10) fonctionne en mode MBBR ou en mode IFAS SBR; les première et deuxième vannes (26A, 26B) dans la sortie double (24B, 24C) étant configurées pour fonctionner de la manière suivante :
- lorsque la première vanne (26A) est ouverte et la deuxième vanne (26B) est fermée, le réacteur de désammonification (10) fonctionne comme un MBBR à flux continu ;
- lorsque la première vanne (26A) est fermée et la deuxième vanne (26B) est ouverte, le réacteur de désammonification (10) fonctionne comme un IFAS SBR non continu ;
dans lequel la grille de retenue (24A) et la sortie double (24B, 24C) s'étendant à partir de celle-ci sont fixes par rapport au réservoir de désammonification unique (12) ; et dans lequel, lorsque la première vanne (26A) est fermée et la deuxième vanne (26B) est ouverte, la grille de retenue (24A) et au moins une partie de la sortie double (24C) sont configurées comme un décanteur pour décanter les eaux usées traitées provenant du réacteur de désammonification (10),
le procédé comprenant :
l'orientation des eaux usées vers un processus de traitement biologique principal et la soumission des eaux usées au traitement biologique et la production de boues et un d'effluent clarifié ;
le traitement des boues dans un flux secondaire par :
- l'orientation des boues vers un digesteur anaérobie (62) dans le flux secondaire ;
- la digestion des boues dans le digesteur anaérobie (62) pour produire des boues digérées ;
- la déshydratation des boues digérées dans le flux secondaire pour produire de l'eau de rejet ;
- l'orientation de l'eau de rejet vers le réacteur de désammonification (10) qui contient de la biomasse supportée sur les supports de biofilm (20) et de la biomasse en suspension et l'élimination de l'ammonium de l'eau de rejet dans le réacteur de désammonification (10) par un processus séquentiel qui comprend les étapes suivantes :
- le remplissage du réacteur de désammonification (10) avec l'eau de rejet ;
- l'aération de l'eau de rejet dans le réacteur de désammonification (10) ;
- la sédimentation de la biomasse dans le réacteur de désammonification (10) ; et
- la décantation de l'eau de rejet traitée en orientant l'eau de rejet vers la grille de retenue (24A) et au moins la partie de la sortie double (24C).

2. Procédé selon la revendication 1, dans lequel le réacteur de désammonification à réservoir unique (10) est configuré pour fonctionner comme un IFAS SBR en l'absence d'un clarificateur en aval.

3. Procédé selon la revendication 1, dans lequel les supports de biofilm (20) ont une gravité spécifique inférieure ou égale à 1 et sont configurés pour flotter dans les eaux usées contenues dans le réservoir de désammonification unique (12).
